# EUROPEAN PATENT APPLICATION

(11) **EP 4 386 896 A1**
(43) Date of publication of application: **19.06.2024**
(21) Application number: 22855753.4
(22) Date of filing: 29.06.2022
(51) Int. Cl.: H01M 4/136, H01M 4/58, H01M 4/70

(54) **NEGATIVE ELECTRODE**

(30) Priority: 11.08.2021 JP 2021131146
(71) Applicant: SHIN-ETSU CHEMICAL CO., LTD., Tokyo 1000005 (JP)
(72) Inventor: HIROSE, Takakazu, Annaka-shi, Gunma 379-0125 (JP); TAKAHASHI, Kohta, Annaka-shi, Gunma 379-0125 (JP); OSAWA, Yusuke, Annaka-shi, Gunma 379-0125 (JP); SAKAI, Reiko, Annaka-shi, Gunma 379-0125 (JP); MURAYAMA, Masaki, Annaka-shi, Gunma 379-0125 (JP)
(74) Representative: Mooser, Sebastian Thomas
(86) International application number: PCT/JP2022/025872
(87) International publication number: WO 2023/017689

(57) **Abstract**

The present invention is a negative electrode including a negative electrode current collector with a surface having roughened surface, and a negative electrode active material layer provided on the negative electrode current collector, in which the negative electrode active material layer has a multilayer structure, in the multilayer structure, a central portion of each layer in a thickness direction includes a composite compound containing silicon, lithium, and oxygen, a plurality of first regions having a lower amount of oxygen, and a plurality of second regions having a higher amount of oxygen than the first regions, and an average width of each of a maximum width in the first regions and a maximum width in the second regions is 10 nm or less. Thereby the negative electrode that can significantly increase a capacity while maintaining excellent battery characteristics can be provided.

## Description

### TECHNICAL FIELD

The present invention relates to a negative electrode.

### BACKGROUND ART

In recent years, small electronic devices, represented by such as mobile terminals, have been widely used, and further miniaturization, weight reduction, and longer service life are strongly required. For such market requirements, in particular, the development of particularly small, lightweight secondary batteries capable of obtaining higher energy density is in progress. These secondary batteries are considered to find application not only for small electronic devices but for large electronic devices such as, typically, automobiles as well as power storage systems such as, typically, houses.

Among those, lithium-ion secondary batteries has been promising because the lithium-ion secondary batteries has a small size and easily has an increased capacity and have higher energy density than those of lead or nickel-cadmium batteries.

The lithium-ion secondary battery described above has positive and negative electrodes, a separator, and an electrolyte liquid. The negative electrode includes a negative electrode active material which involved with charge-and-discharge reactions.

The negative electrode active material, while a carbon-based active material is widely used, is required to further improve the battery capacity further for recent market requirements. Using silicon as the negative electrode active material is considered to improve the battery capacity. This is because silicon has a theoretical capacity (4199 mAh/g) more than ten times larger than graphite (372 mAh/g). Such a material is thus expected to improve the battery capacity significantly. The development of silicon materials for use as negative electrode active materials includes not only single substance of silicon but also alloy thereof and a compound thereof such as typically oxides. A form of the active material is investigated from an applying type, which is standard in the carbon-based active material, to an integrated type in which the active material is directly deposited on a current collector.

However, when silicon is used as a main raw material of the negative electrode active material, the negative electrode active material is to expand and contract during charge and discharge, easily leading to cracking mainly near a surface layer of the negative electrode active material. Furthermore, an ionic substance is to be generated inside the active material, thereby the active material is to be easy to crack. On cracking of the surface layer of the negative electrode active material, a new surface is generated to increase a reaction area of the active material. In this time, a decomposition reaction of the electrolyte liquid occurs on the new surface, and a coating, which is a decomposed product of the electrolyte liquid, is formed on the new surface to consume the electrolyte liquid. Therefore, cycle characteristics are likely to be deteriorated.

To improve initial efficiency and cycle characteristics of the battery, various investigations have been made so far on a negative electrode material mainly containing the silicon material and electrode structure for a lithium-ion secondary battery.

Specifically, for a purpose of obtaining good cycle characteristics and high safety, silicon and amorphous silicon dioxide are simultaneously deposited by using a gas phase method (for example, see Patent Document 1). To obtain a high battery capacity and safety, a carbon material (electron-conducting material) is provided on a surface layer of a silicon oxide particle (for example, see Patent Document 2). Furthermore, to improve the cycle characteristics and to obtain high input-and-output characteristics, an active material containing silicon and oxygen is produced to form an active material layer having a high oxygen ratio near a current collector (for example, see Patent Document 3). To improve the cycle characteristics, oxygen is contained in a silicon active material to form an active material layer so that an average oxygen content is 40 at% or less and so that an oxygen content is larger near a current collector (for example, see Patent Document 4).

To improve the initial charge-and-discharge efficiency, a nano-composite having a Si phase, SiO₂, and a M_{y}O metal oxide is used (for example, see Patent Document 5). To improve the cycle characteristics, SiOₓ (0.8 ≤ x ≤ 1.5 and particle diameter range = 1 um to 50 um) and a carbon material are mixed and the mixture is calcined at a high temperature (for example, see Patent Document 6). To improve the cycle characteristics, a mole ratio of oxygen to silicon in a negative electrode active material is set to 0.1 to 1.2, and the active material is regulated within a range that a difference of maximum value and minimum value in the mole ratio near an interface between the active material and a current collector is 0.4 or less (for example, see Patent Document 7). To improve battery load characteristics, a metal oxide containing lithium is used (for example, see Patent Document 8). To improve the cycle characteristics, a hydrophobic layer such as a silane compound is formed on a surface layer of a silicon material (for example, see Patent Document 9). To improve the cycle characteristics, silicon oxide is used and a graphite coating is formed on a surface layer of the silicon oxide to impart conductivity (for example, see Patent Document 10). In Patent Document 10, regarding a shift value obtained by a RAMAN spectrum corresponding to the graphite coating, broad peaks appear at 1330 cm⁻¹ and 1580 cm⁻¹, and a strength ratio thereof I₁₃₃₀/I₁₅₈₀ is 1.5 < I₁₃₃₀/I₁₅₈₀ < 3. To achieve the high battery capacity and to improve the cycle characteristics, a particle having a silicon fine crystal phase dispersed in silicon dioxide is used (for example, see Patent Document 11). To improve overcharge-and-overdischarge characteristics, a silicon oxide in which an atomic ratio between silicon and oxygen is regulated to 1 : y (0 < y < 2) is used (for example, see Patent Document 12).

As a lithium-ion secondary battery using silicon oxide, Hitachi Maxell, Ltd. started to ship a prismatic secondary battery for a smartphone that adopted a nano-silicon composite in June, 2010 (for example, see Non Patent Document 1). Silicon oxide proposed by Hohl is a composite material with Si⁰⁺ to Si⁴⁺, which has various oxidation states (see Non Patent Document 2). Kapaklis proposes a disproportionation structure that is to be separated into Si and SiO₂ by applying thermal load to silicon oxide (see Non Patent Document 3). Miyachi et al. pay attention to Si and SiO₂, which contribute to charge and discharge, among the silicon oxide having the disproportionation structure (see Non Patent Document 4), and Yamada et al. propose a formula of a reaction between the silicon oxide and Li as follows (see Non Patent Document 5).

2SiO(Si+SiO₂) + 6.85Li⁺ + 6.85e⁻ → 1.4Li_{3.75}Si + 0.4Li₄SiO₄ + 0.2SiO₂

The above reaction formula indicates that Si and SiO₂ constituting silicon oxide react with Li to be separated into a Li silicide and a Li silicate, and partially unreacted SiO₂.

Here, the generated Li silicate, which is irreversible component, is considered to be a stable substance not leasing Li after once formed. A capacity per weight calculated from this reaction formula has a value close to an experimental value, and this reaction formula is recognized as a reaction mechanism of silicon oxide. Kim et al. identify the Li silicate, which is the irreversible component generated with charge and discharge of silicon oxide, as Li₄SiO₄ by using ⁷Li-MAS-NMR and ²⁹Si-MAS-NMR (see Non Patent Document 6).

This irreversible capacity is the weakest point of silicon oxide, and improvement is required. Accordingly, Kim et al. produce a negative electrode having remarkably improved initial efficiency as a battery and being practically usable by using a Li pre-doping method to form the Li silicate in advance (see Non Patent Document 7).

There was also proposed a method of treating a powder, not Li-doping the electrode, to achieve the improvement of the irreversible capacity (see Patent Document 13).

### CITATION LIST

### PATENT LITERATURE

Patent Document 1: JP 2001-185127 A
Patent Document 2: JP 2002-042806 A
Patent Document 3: JP 2006-164954 A
Patent Document 4: JP 2006-114454 A
Patent Document 5: JP 2009-070825 A
Patent Document 6: JP 2008-282819 A
Patent Document 7: JP 2008-251369 A
Patent Document 8: JP 2008-177346 A
Patent Document 9: JP 2007-234255 A
Patent Document 10: JP 2009-212074 A
Patent Document 11: JP 2009-205950 A
Patent Document 12: JP H06-325765 A
Patent Document 13: JP 2015-156355 A

### NON PATENT LITERATURE

Non Patent Document 1: Battery Association of Japan, Newsletter "Denchi (battery)", May 1, 2010, p. 10
Non Patent Literature 2: A. Hohl, T. Wieder, P. A. van Aken, T. E. Weirich, G. Denninger, M. Vidal, S. Oswald, C. Deneke, J. Mayer, and H. Fuess : J. Non-Cryst. Solids, 320, (2003), 255.
Non Patent Literature 3: V. Kapaklis, J. Non-Crystalline Solids, 354 (2008) 612
Non Patent Literature 4: Mariko Miyachi, Hironori Yamamoto, and Hidemasa Kawai, J. Electrochem. Soc. 2007 volume 154, issue 4, A376-A380
Non Patent Literature 5: M. Yamada, M. Inaba, A. Ueda, K. Matsumoto, T. Iwasaki, T. Ohzuku, J. Electrochem. Soc., 159, A1630 (2012)
Non Patent Literature 6: Taeahn Kim, Sangjin Park, and Seung M. Oh, J. Electrochem. Soc. volume 154, (2007), A1112-A1117.
Non Patent Literature 7: Hye Jin Kim, Sunghun Choi, Seung Jong Lee, Myung Won Seo, Jae Goo Lee, Erhan Deniz, Yong Ju Lee, Eun Kyung Kim, and Jang Wook Choi,. Nano Lett. 2016, 16, 282-288.
Non Patent Document 8: Noboru Sato (ed.) "The Latest Development Trends on Lithium-ion Batteries for xEV", CMC Publishing, November 27, 2020, pp. 96-111.

### SUMMARY OF INVENTION

### TECHNICAL PROBLEM

As described above, small electronic devices, represented by mobile terminals, have been advancing recently toward high performance and multifunction, and a lithium-ion secondary battery, which is the main electric source thereof, is required to increase the battery capacity. As a solution for this problem, it is desired to develop a lithium-ion secondary battery containing a negative electrode using a silicon material as a main material. Moreover, such a lithium-ion secondary battery using silicon material is desired to have initial charge-discharge characteristics and cycle characteristics almost equivalent to those of a lithium-ion secondary battery using a carbon-based active material. Thereupon, the cycle characteristics and initial charge-discharge characteristics have been improved by using a negative electrode active material that is silicon oxide modified by insertion and partial release of Li. In recent years, an irreversible capacity, which is a disadvantage of silicon oxide, has been reduced by using silicon oxide as a main material, containing Li in advance to produce Li silicate, which is actually beginning to be marketed. Even if Li-SiO-C (Non-Patent Document 8), in which Li is used to the silicon oxide, is used to replace 100% of a carbon-negative electrode material, a prototype battery has only a capacity increase in an upper 20% range compared to the battery with the carbon negative electrode material. This means further improvement of battery capacity is required owing to consideration of improvement of performance of small electronic devices (e.g., 5G) or an extended driving range of electric vehicles.

The present invention has been made in view of the above-described problem. An object of the present invention is to provide a negative electrode capable of significantly increasing capacity while maintaining excellent battery characteristics.

### SOLUTION TO PROBLEM

To achieve the object, the present invention provides a negative electrode comprising:
a negative electrode current collector with a surface having roughened surface; and
a negative electrode active material layer provided on the negative electrode current collector,
wherein the negative electrode active material layer has a multilayer structure,
in the multilayer structure, a central portion of each layer in a thickness direction includes a composite compound containing silicon, lithium, and oxygen, a plurality of first regions having a lower amount of oxygen, and a plurality of second regions having a higher amount of oxygen than the first regions, and
an average width of each of a maximum width in the first regions and a maximum width in the second regions is 10 nm or less.

The inventive negative electrode includes the composite compound containing silicon, lithium, and oxygen, and therefore can increase battery capacity. In addition, unlike a general electrode, the negative electrode active material layer can be directly supported on the roughened surface of the negative electrode current collector without a binder or a conductive auxiliary agent. A region in the electrode that is not involved in charge and discharge can be reduced, excess space can be reduced, and thus, energy density of the electrode can be significantly improved.

Moreover, the negative electrode active material layer having the multilayer structure can realize a smooth insert of Li while suppressing decomposition of an electrolyte liquid.

Furthermore, in the inventive negative electrode, the central portion of each layer in the thickness direction of the negative electrode active material layer having the multilayer structure includes a plurality of first regions having the lower amount of oxygen and a plurality of second regions having the higher amount of oxygen than the first regions and the average width of each of the maximum width in the first regions and the maximum width in the second regions is 10 nm or less, therefore the first regions and the second regions densely exist in the central portion of each layer in the thickness direction of the negative electrode active material layer.

The first regions having the lower amount of oxygen are mainly involved in charge and discharge. The second regions having the higher amount of oxygen play a role to relax a stress generated by expansion and contraction of the first regions. In the inventive negative electrode, such first regions and second regions densely exist, and the capacity can be increased while maintaining excellent battery characteristics (particularly, excellent cycle characteristics).

As a result, according to the inventive negative electrode, the capacity can be significantly increased while maintaining excellent battery characteristics and, particularly, excellent cycle characteristics.

A ratio of oxygen/silicon is preferably higher than 1/3 in peak intensity, analyzed by a TEM-EDX, of the composite compound in each of the first regions and the second regions.

Such a composite compound can contribute charge and discharge as Si-O even in the first regions having the lower amount of oxygen, and reduce decomposition reaction of the electrolyte liquid due to Si-Si. Thus, such a negative electrode, including the composite compound, can exhibit better cycle characteristics.

The composite compound preferably does not have a crystal plane of Si (111) in TEM observation.

The degradation of the composite compound can be delayed by having a structure in which the crystal plane of Si (111) cannot be confirmed.

The composite compound preferably contains at least any one of Li₄SiO₄ and Li₂SiO₃.

By including at least any one of Li₄SiO₄ and Li₂SiO₃ in the composite compound, an irreversible capacity can be reduced, and excellent initial efficiency can be realized.

Ten-point mean roughness Rz of the surface of the negative electrode current collector is preferably within a range of 1.5 um or more and 5 um or less.

In the case of the ten-point mean roughness Rz of the surface of the negative electrode current collector within the range described above, a thickness of the negative electrode current collector does not become too thick; thus, high battery capacity is maintained. Furthermore, a sufficient anchor effect can be ensured, and a delamination of the negative electrode active material layer from the negative electrode current collector can be more reliably suppressed.

### ADVANTAGEOUS EFFECTS OF INVENTION

As described above, the inventive negative electrode can significantly increase the capacity while maintaining excellent battery characteristics. For example, high initial efficiency, large capacity, high input characteristics, and high cycle characteristics can be obtained when the inventive negative electrode is used.

### BRIEF DESCRIPTION OF DRAWINGS

FIG. 1 is a view illustrating a cross-sectional view of an example of a configuration of a negative electrode according to the present invention.
FIG. 2 is a view illustrating a cross-sectional HAADF-STEM image of a negative electrode active material layer of an example of a negative electrode according to the present invention.
FIG. 3 is an EDX spectrum for a "1" portion in FIG. 2.
FIG. 4 is an EDX spectrum for a "2" portion in FIG. 2.
FIG. 5 is a view illustrating an exploded view of a configuration example (a laminate film type) of a lithium-ion secondary battery including a negative electrode according to the present invention.
FIG. 6 is a cross-sectional TEM image of a negative electrode active material layer of a negative electrode in Example 1.
FIG. 7 is a cross-sectional BF-STEM image of the negative electrode active material layer of the negative electrode in Example 1.
FIG. 8 is a cross-sectional HAADF-STEM image of the negative electrode active material layer of the negative electrode in Example 1.
FIG. 9 is a cross-sectional HAADF-STEM image of a negative electrode active material layer of a negative electrode in Example 2.
FIG. 10 is an EDX spectrum for a "1" portion in FIG. 9.
FIG. 11 is an EDX spectrum for a "2" portion in FIG. 9.
FIG. 12 is a cross-sectional TEM image of the negative electrode active material layer of the negative electrode in Example 2.
FIG. 13 is a cross-sectional BF-STEM image of a negative electrode active material layer of a negative electrode in Example 3.
FIG. 14 is a cross-sectional HAADF-STEM image of the negative electrode active material layer of the negative electrode in Example 3.
FIG. 15 is a cross-sectional TEM image of a negative electrode active material layer of a negative electrode in Comparative Example 1.
FIG. 16 is a cross-sectional BF-STEM image of the negative electrode active material layer of the negative electrode in Comparative Example 1.
FIG. 17 is a cross-sectional HAADF-STEM image of the negative electrode active material layer of the negative electrode in Comparative Example 1.
FIG. 18 is a cross-sectional drift correction EDS mapping image of the negative electrode active material layer of the negative electrode in Comparative Example 1.
FIG. 19 is a cross-sectional BF-STEM image of the negative electrode active material layer of the negative electrode in Comparative Example 1.
FIG. 20 is an EDX spectrum for a "1" portion in FIG. 18 and FIG. 19.
FIG. 21 is a cross-sectional drift correction EDS mapping image of the negative electrode active material layer of the negative electrode in Comparative Example 1.
FIG. 22 is a cross-sectional BF-STEM image of the negative electrode active material layer of the negative electrode in Comparative Example 1.
FIG. 23 is an EDX spectrum for a "1" portion in FIG. 21 and FIG. 22.
FIG. 24 is a cross-sectional TEM image of a negative electrode active material layer of a negative electrode in Comparative Example 2.

### DESCRIPTION OF EMBODIMENTS

As described above, as one method to increase the battery capacity of a lithium-ion secondary battery, a negative electrode with silicon oxide as a main material has been studied for use as the negative electrode of the lithium-ion secondary battery. This lithium-ion secondary battery using this silicon oxide is desired to have initial charge-and-discharge characteristics that are close to being equivalent to those of the lithium-ion secondary battery using carbon-based active material. In addition, by using Li-doped SiO, which can improve the initial charge-and-discharge characteristics, a significant increase in capacity can be promised, but further capacity improvement is required for an automotive application.

Thereupon, the present inventors have earnestly studied to obtain the negative electrode that can improve initial charge-and-discharge characteristics and increase battery capacity while obtaining high cycle characteristics when used as the negative electrode for the secondary battery, and the present invention has been completed.

That is, the present invention is a negative electrode comprising:
a negative electrode current collector with a surface having roughened surface; and
a negative electrode active material layer provided on the negative electrode current collector,
wherein the negative electrode active material layer has a multilayer structure,
in the multilayer structure, a central portion of each layer in a thickness direction includes a composite compound containing silicon, lithium, and oxygen, a plurality of first regions having a lower amount of oxygen, and a plurality of second regions having a higher amount of oxygen than the first regions, and
an average width of each of a maximum width in the first regions and a maximum width in the second regions is 10 nm or less.

Hereinafter, the present invention will be described in detail. However, the present invention is not limited thereto.

### <Negative Electrode>

To begin with, referring to drawings, a configuration of the inventive negative electrode is described.

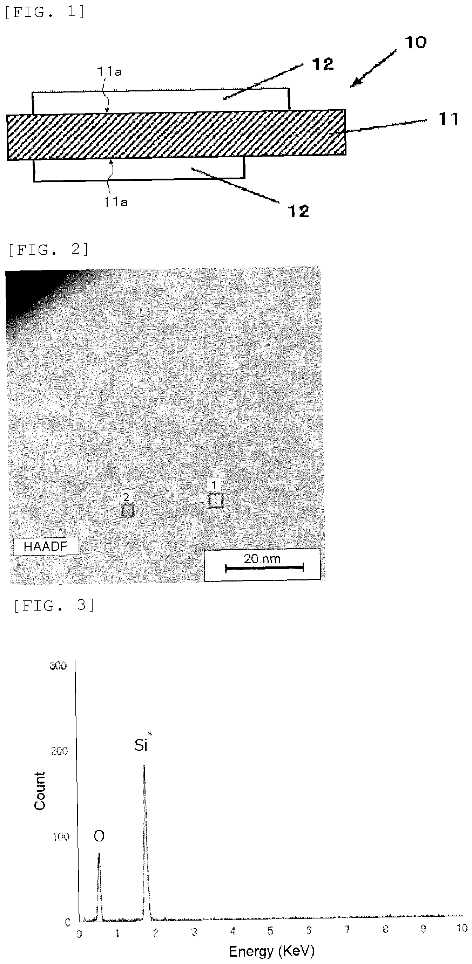

FIG. 1 shows a cross-sectional view of an example of the inventive negative electrode. As shown in FIG. 1, a negative electrode 10 has the structure having a negative electrode current collector 11 and negative electrode active material layers 12 provided on surfaces 11a of this negative electrode current collector 11. This negative electrode active material containing layer 12 may be provided on both surfaces 11a of the negative electrode current collector 11, as shown in FIG. 1, or only on one side of the surfaces 11a.

The surface 11a of the negative electrode current collector 11 is a roughened surface. That is to say, the negative electrode active material layer 12 is provided on the roughened surface 11a of the negative electrode current collector 11.

Hereinafter, the negative electrode current collector 11 and the negative electrode active material layer 12 are described, respectively.

### [Negative Electrode Current Collector]

The negative electrode current collector 11 is made of a highly electric conductive, mechanically strong material. Examples of the electric conductive material used for the negative electrode current collector 11 include copper (Cu) and nickel (Ni). These electric conductive materials are preferably materials that do not form an intermetallic compound with lithium (Li) .

The negative electrode current collector 11 preferably contains carbon (C) or sulfur (S) besides a main element. This is because these elements improve the physical strength of the negative electrode current collector. In particular, when an active material layer that expands in charging is included, the current collector containing the above elements can prevent the deformation of an electrode including the current collector. The amount of content of the contained elements described above is not particularly limited but is preferred that each element thereof is 100 ppm by mass or less, among others. That is because the effect of preventing deformation can be obtained. Such an effect of preventing deformation further improves the cycle characteristics.

In addition, the surface 11a of the negative electrode current collector 11 needs to be roughened, and preferably, a ten-point mean roughness Rz is 1.5 um or more and 5 um or less. When the ten-point mean roughness Rz of the surface 11a of the negative electrode current collector 11 is 5 um or less, a thickness of the negative electrode current collector 11 does not become too thick, and a large battery capacity can be maintained. Meanwhile, when the ten-point mean roughness Rz of the surface 11a of the negative electrode current collector 11 is 1.5 um or more, sufficient anchor effect can be ensured. As a result, a delamination of the negative electrode active material layer 12 from the negative electrode current collector 11 can be more reliably suppressed. The negative electrode current collector roughened includes, for example, a metallic foil having been subjected to an electrolyzing process, an embossing process, or a chemical etching process.

### [Negative Electrode Active Material Layer]

The negative electrode active material layer 12 has a multilayer structure and further includes a central portion of each layer in a thickness direction, including a composite compound containing silicon, lithium, and oxygen.

The inventive negative electrode 10 can improve battery capacity because the negative electrode active material layer 12 includes the composite compound containing silicon, lithium, and oxygen. Moreover, unlike general electrodes, the negative electrode active material layer can be directly supported on the roughened surface of the negative electrode current collector without using a binder or a conductive auxiliary agent, thus, a region in the electrode that does not involve charge and discharge can be reduced and an excessive space can be reduced. Consequently, the energy density of the electrode can be significantly improved.

In this way, by using the negative electrode 10 having the negative electrode active material layer 12 that is closely supported, it is possible to increase the energy density of the battery, which cannot be achieved with a powder electrode.

Moreover, the thus formed negative electrode active material layer 12 can contain a plurality of particles of the composite compound containing silicon, lithium, and oxygen, thus, a plurality of particles can be adjacent to each other.

Furthermore, this negative electrode active material layer 12 has the multilayer structure. The negative electrode active material layer 12, having the multilayer structure, can realize smooth insertion of Li while suppressing decomposition of the electrolyte. Each interlayer becomes an oxygen-rich structure, but this is not the main active material portion. The portion that principally occludes and desorbs Li is the portion of the active material layer other than the interlayer portions of the multilayer structure, i.e., a central portion of each layer in a thickness direction. In the composite compound present in this region, a variation of oxygen is present, and a Si-O compound (first regions), which mainly charges and discharges, and a Li silicate phase (second regions), which plays a buffering role, are present densely. In the multilayer structure of the negative electrode active material layer 12, the Si-rich layer preferably has a thickness of 10 nm or more. On the other hand, the oxygen-rich interlayer portion preferably has a thickness of 10 nm or less.

More specifically, in the negative electrode active material layer 12 of the inventive negative electrode 10, an average width of each of a maximum width in the first regions and a maximum width in the second regions is 10 nm or less; thus, the first regions and the second regions are present densely in the central portion of each layer in a thickness direction of the negative electrode active material layer 12.

The first regions having a low amount of oxygen are mainly involved in charging and discharging. The second regions having high amount of oxygen play a role in buffering a stress caused by the expansion and contraction of the first region. In the inventive negative electrode, since the first regions and the second regions are present densely, the capacity can be increased while maintaining excellent battery characteristics, in particular, excellent cycle characteristics.

In the negative electrode active material layer 12 of the negative electrode 10, the lower limit of the average width of each of the maximum width in the first regions and the maximum width in the second regions is not particularly limited. For example, the average width of the maximum width in the first regions may be 5 nm or more. In addition, the average width of the maximum width in the second regions may be 5 nm or more.

In particular, an oxygen/silicon ratio of the composite compound is an important factor. When oxygen is low relative to silicon, silicon contributes to charge and discharge; when silicon is present as a lower-valence silicon compound, the compound is easily changed to silicon on charge and discharge. When silicon contributes to charge and discharge, a decomposition reaction of the electrolyte by Si-Si is generated. The element ratio of oxygen/silicon is desirably 1/3 or higher for an active material that contributes to charge and discharge while maintaining the Si-O bonding.

Meanwhile, when oxygen is sufficiently large relative to silicon, the capacity of the active material itself is reduced because the material is no longer a reversible component. However, the second regions having sufficiently large amounts of oxygen have a number of sites where quadrivalent Li silicate is constituted, and these are the necessary regions because the regions have good Li diffusivity and can buffer the stress caused by expansion and contraction in the first regions, which are low-valence regions.

In the negative electrode active material layer 12 of the inventive negative electrode 10, a silicon compound particle containing lithium and oxygen preferably has a structure that is directly supported on the roughened portion of the current collector, and a ratio of silicon to oxygen constituting the silicon compound is preferably within a range of SiOₓ: 0.8≤x≤1.2. The composite compound containing silicon, lithium, and oxygen can be included in this silicon compound. When "x" is 0.8 or more, a higher oxygen ratio than the single substance of silicon is provided, resulting in better cycle characteristics. When "x" is 1.2 or less, it is preferred because the resistance of silicon oxide is not too high. Above all, SiOₓ composition having "x" closer to 1 is preferable. The reason is that high cycle characteristics can be obtained. Furthermore, the composition of the silicon compound in the present invention does not necessarily mean 100 % purity but may contain a trace amount of an impurity element.

For typical powder silicon oxide, sublimated SiO gas is deposited on a plate and collected, and after pulverization, conductivity is provided by using CVD. However, when the negative electrode active material layer 12 is directly deposited on the negative electrode current collector (e.g., copper foil) 11 having the roughened surface 11a, as described above, the thickness can be several tens of um or less, which enables more soaking and uniform composition.

In the case of powder, the powder needs to be deposited on the plate in a thick bulk state (when the thickness is several tens µm, the layer is not exfoliated, i.e., cannot be recovered), and even if a recovering plate is sufficiently cooled during a bulk formation, absorbing radiant heat and heat of solidification is physically impossible. As a result, a strong concentration distribution (oxygen/silicon) is generated inside the particle, and battery characteristics cannot be sufficiently obtained.

In addition, the negative electrode active material layer 12, which is a film directly supported on the negative electrode current collector 11 (e.g., copper foil) having the roughened surface 11a, does not need to provide any particular conductivity to the negative electrode active material layer 12 because a transfer of Li and electrons start from the vicinity of the current collector 11. By contrast, in the powder state, the binder, which has poor or no conductivity, needs to be used for coating and binding; thus, the particles need to be provided with conductivity. A thermal decomposition CVD can be mentioned as this method to impart conductivity; in this case, due to the provided heat load, the variation of the oxygen/silicon ratio of the bulk tends to be clearly produced, thus obtaining uniform film composition is difficult when compared to the direct supporting on the current collector.

The type of Li silicate in the negative electrode active material layer 12 can be confirmed by solid-state NMR.

For example, a measurement by the NMR can be performed under the following conditions.
²⁹Si-MAS-NMR (magic angle spinning nuclear magnetic resonance)
·Apparatus: a 700-NMR spectroscope manufactured by Bruker Corp.,
·Probe: a 4-mm HR-MAS rotor 50 µL,
·Sample Spinning Speed: 10 kHz,
·Measurement Environment Temperature: 25°C.

The variation of silicon and oxygen (the distribution of silicon and oxygen, and the oxygen/silicon ratio) in the negative electrode active material layer 12 can be confirmed by a transmission electron microscope equipped with an energy dispersive X-ray spectroscopy (TEM-EDX).

An example of a specific process is as follows. When the negative electrode 10, being a target to be confirmed, is incorporated into the battery, the battery is disassembled in a glove box (GB), and the negative electrode 10 is taken out. Then, each negative electrode 10 is cleaned with dimethyl carbonate (DMC) and the like. The negative electrode 10 after the cleaning is performed by cross-sectional processing for both surfaces using a focused ion beam (FIB) processing apparatus under non-exposure conditions to the atmosphere. For example, XVision200DB manufactured by SIINT Inc. can be used as the FIB processing apparatus, and an acceleration voltage can be applied to 30 kV, for example. A thinned sample of the negative electrode 10 is obtained by the FIB processing, and this thinned sample is observed by TEM. The TEM observation can be performed by using a Tecnai G2 F20 manufactured by FEI Company, for example, and an acceleration voltage can be 200 kV, for example. For example, an r-TEM manufactured by EDAX Corporation can be used as an EDX apparatus, and an acceleration voltage can be 200 kV.

FIG. 2 shows a cross-sectional image of the negative electrode active material layer of an example of the inventive negative electrode by a High-Angle Annular Detector Dark-Field Scanning Transmission Electron Microscope (cross-sectional HAADF-STEM image). FIG. 2 is a cross-sectional HAADF-STEM image of a sample of the negative electrode 10 having a sample thickness of about 0.1 um.

In the HAADF-STEM image obtained by TEM-EDX, the regions having a higher amount of oxygen are shown with lower brightness. In addition, the higher the regions have an amount of silicon, the higher the brightness is shown. In an image obtained by binarizing a grayscale HAADF-STEM image, as shown in FIG. 2, the regions shown in white can be regarded as the first regions having a low amount of oxygen, and the regions shown in black can be regarded as the second regions having a high amount of oxygen.

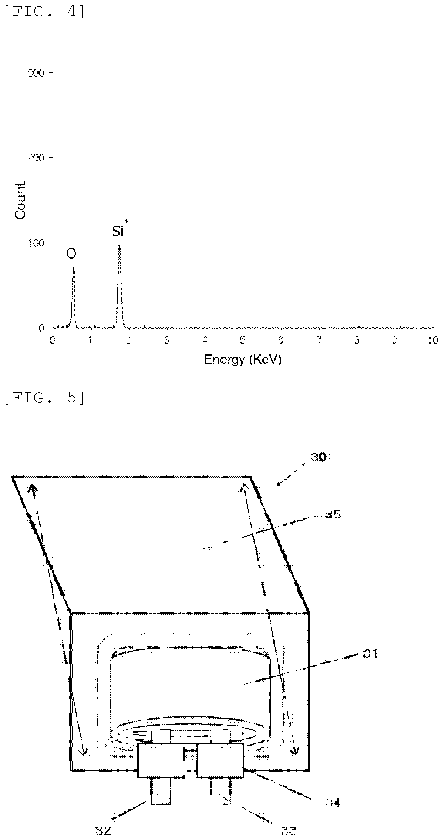

The EDX spectrum (EDS analysis result) of the high brightness area surrounded by a square marked with "1" in the cross-sectional HAADF-STEM image of FIG. 2 is shown in FIG. 3. Moreover, the EDX spectrum (EDS analysis result) of the low brightness area surrounded by a square marked with "2" in the cross-sectional HAADF-STEM image of FIG. 2 is shown in FIG. 4.

The ratio of oxygen to silicon (oxygen/silicon ratio) in the EDX spectrum shown in FIG. 3 and FIG. 4 corresponds to the amount of oxygen in each region. FIG. 3 and FIG. 4 indicate that the oxygen/silicon ratio at the area "1" shown in FIG. 2 is lower than the oxygen/silicon ratio at the area "2" shown in FIG. 2. Consequently, the "1" area in FIG. 2 is the first region having a lower amount of oxygen, and the "2" area in FIG. 2 is the second region having a higher amount of oxygen than the first region.

In the negative electrode 10, in which the cross-sectional HAADF-STEM image is shown in FIG. 2, the central portion of the negative electrode active material layer 12 in the thickness direction includes a plurality of the first regions and a plurality of the second regions. The average width of each of the maximum width in the first regions and the maximum width in the second regions is 5 nm.

The average value of the maximum widths in the first regions can be calculated by averaging the maximum widths of a plurality of the first regions shown in the images obtained as described above. The average value of the maximum widths in the second regions can be calculated in the same manner.

Moreover, in FIG. 2, the regions have high brightness, in other words, the first regions, are discontinuous. This means that the composite compound containing silicon, lithium, and oxygen does not have a network structure of silicon in FIG. 2, which was obtained by the HAADF observation.

When silicon has the network structure inside the particles, silicon constituting SiO tends to facilitate the formation of silicon accompanying charge and discharge. The silicon portion cannot be completely isolated but can delay the degradation by having discontinuous silicon structures.

Furthermore, the first regions and the regions having low brightness, i.e., the second regions, are distributed at a similar size in FIG. 2. In such a distribution, the first regions and the second regions can exist in a denser state, which can realize better cycle characteristics.

In a peak intensity analyzed by TEM-EDX of the composite compound in each of the first regions and the second regions, the oxygen/silicon ratio is preferably higher than 1/3. The oxygen/silicon ratio is more preferably 1/3 or higher and 1.2 or lower.

Not only does Si-O simply have a disproportionation structure, but also operates as Si-O even in the first regions having low oxygen, thus, the decomposition reaction of the electrolyte by Si-Si can be reduced, and the battery characteristics can be improved.

In addition, in TEM observation, a crystal structure of a Si (111) plane in conventional carbon coating SiO or Li-doped SiO can be generally confirmed. In this case, the Si-O compound close to the Si portion is decomposed by repeating charge and discharge, and Si tends to generate. The composite compound of the inventive negative electrode can delay the degradation of the particles by having a structure in which Si (111) plane, a crystal plane of silicon, cannot be confirmed.

### [Method for Manufacturing Negative Electrode]

Then, an example of a method for manufacturing an inventive negative electrode is described. However, the method for manufacturing the inventive negative electrode is not limited to the example described below.

To begin with, a silicon compound layer containing oxygen is produced. The silicon compound layer containing oxygen contains particles of silicon oxide (silicon active material particles).

The layer containing the particles of silicon oxide can be, for example, formed by depositing silicon oxide gas on the negative electrode current collector having a roughened surface, e.g., a roughened copper foil having a surface Rz of 2.5 um. A specific method is as follows.

Firstly, a raw material that generates silicon oxide gas is heated at a temperature of 1100°C or more under reduced pressure to generate silicon oxide gas. At this time, a mixture of metallic silicon powder and silicon dioxide powder can be used as the raw material. Considering the presence of surface oxygen of the metallic silicon powder and trace oxygen in a reaction furnace, the mixed molar ratio is desirable to be in the range of 0.9 < metallic silicon powder/silicon dioxide powder < 1.2.

In addition, silicon oxide can also be formed by introducing oxygen gas into metallic silicon used. Similarly, reducing gas (hydrogen) can be introduced into silicon dioxide gas.

From a view of controlling the oxygen/silicon ratio, using metallic silicon powder and silicon dioxide powder is the most desirable.

Silicon oxide gas generated is deposited on the roughened portion of the surface of the negative electrode current collector and becomes a primary particle having a columnar structure.

In this case, the structure of the primary particle can be changed by changing a roughened structure on the surface of the negative electrode current collector.

Solidification heat during deposition and radiant heat of a heating section facilitate crystallization of the active material layer. Consequently, it is necessary to perform vapor phase growth while travelling the negative electrode current collector to reduce the heat load so as to prevent the crystallization of Si.

In particular, unlike silicon, silicon oxide is sublimable, which can be rapidly deposited, and has no concern for radiant heat received from molten silicon, which is a problem with silicon films; thus, it can be said that silicon oxide be suited for a formation of the silicon compound layer.

Examples of concrete measures to reduce the heat load during the formation of the silicon compound layer include increasing the traveling speed of the negative electrode current collector to shorten the time being subjected to heat load, using a can roll equipped with a cooling mechanism to travel the negative electrode current collector while cooling thereof; adjusting the area of the steam outlet opening; and using the negative electrode current collector having a small-thickness to dissipate heat efficiently.

Moreover, after the silicon compound layer is formed, the silicon compound layer can be also cooled by spraying oxygen-containing gas (e.g., nitrogen gas) to prevent the crystallization of Si from progressing.

For example, by film-forming the silicon compound layer while reciprocating the negative electrode current collector, the silicon compound layer having a multilayer structure can be formed (reciprocating multilayer formation).

Then, Li is inserted into the silicon compound layer produced as described above. This produces negative electrode active material particles containing a lithium-inserted silicon compound (a composite compound containing silicon, lithium, and oxygen) particles. That is to say, the silicon active material particles are modified, and a Li compound is generated within the silicon compound particles. Inserting Li is preferably performed by a redox method.

In the modification by the redox method, for example, lithium can be inserted by immersing silicon active material particles into solution-A, where lithium is dissolved into an ether-based solvent, for example. This solution-A may also contain a polycyclic aromatic compound or a linear polyphenylene compound additionally. After inserting lithium, active lithium can be desorbed from the silicon active material particles by immersing the silicon active material particles into solution-B, which contains a polycyclic aromatic compound or its derivatives. Solvents usable for this solution-B include, for example, ether-based solvents, ketone-based solvents, ester-based solvents, alcohol-based solvents, amine-based solvents, and a mixture thereof. The obtained silicon active material particles may be heat-treated in an inert gas after being immersed in the solution-A. The heat treatment allows the Li compound to be stable. After that, the compound may be cleaned by cleaning methods such as alkaline water in which alcohol or lithium carbonate is dissolved, weak acid, or pure water.

As the ether-based solvent used in the solution-A, such as diethyl ether, tert-butyl methyl ether, tetrahydrofuran, dioxane, 1,2-dimethoxy ethane, diethylene glycol dimethyl ether, triethylene glycol dimethyl ether, tetraethylene glycol dimethyl ether, or mixed solvents thereof may be used. Among these, in particular, tetrahydrofuran, dioxane, and 1,2-dimethoxy ethane may be preferred. These solvents prefer to be dehydrated and deoxygenized.

Further, as the polycyclic aromatic compound contained in the solution-A, one or more kinds of naphthalene, anthracene, phenanthrene, naphthacene, pentacene, pyrene, picene, triphenylene, coronene, chrysene, and derivatives thereof can be used, and, as the linear polyphenylene compound, one or more kinds of biphenyl, terphenyl, and derivatives thereof can be used.

As the polycyclic aromatic compound contained in the solution-B, one or more kinds of naphthalene, anthracene, phenanthrene, naphthacene, pentacene, pyrene, picene, triphenylene, coronene, chrysene, and derivatives thereof can be used.

Further, as the ether-based solvent of the solution-B, such as diethyl ether, tert-butyl methyl ether, tetrahydrofuran, dioxane, 1,2-dimethoxy ethane, diethylene glycol dimethyl ether, triethylene glycol dimethyl ether, and tetraethylene glycol dimethyl ether can be used.

As the ketone-based solvent, acetone, acetophenone, or the like can be used.

As the ester-based solvent, methyl formate, methyl acetate, ethyl acetate, propyl acetate, and isopropyl acetate or the like can be used.

As the alcohol-based solvent, methanol, ethanol, propanol, isopropyl alcohol, or the like can be used.

As amine-based solvents, methylamine, ethylamine, ethylenediamine, or the like can be used.

By inserting lithium, as described above, the negative electrode active material layer, including the composite compound containing silicon, lithium, and oxygen, can be obtained.

### <Lithium-ion Secondary Battery>

The inventive negative electrode can be used in the negative electrode in a non-aqueous electrolyte secondary battery, e.g., a lithium-ion secondary battery.

Then, as a concrete example of the non-aqueous electrolyte secondary battery, in which the inventive negative electrode can be used, an example of the laminate-film type lithium-ion secondary battery is described.

### [Configuration of Laminate-Film Type Lithium-Ion Secondary Battery]

The laminate film-type lithium-ion secondary battery 30 shown in FIG. 5 mainly includes a wound electrode body 31 stored in sheet-shaped exterior member 35. This wound electrode body 31 includes a positive electrode, the negative electrode, and a separator disposed between these electrodes, and is formed by winding them. There is also a case of storing a laminate having the separator disposed between the positive electrode and the negative electrode without winding. The electrode bodies of both types have a positive-electrode lead 32 attached to the positive electrode and a negative-electrode lead 33 attached to the negative electrode. The outermost circumference of the electrode body is protected by a protecting tape.

The positive-electrode lead 32 and the negative-electrode lead 33, for example, extend outward in one direction from the interior of the exterior member 35. The positive-electrode lead 32 is made of, for example, a conductive material such as aluminum, and the negative-electrode lead 33 is made of, for example, a conductive material such as nickel or copper.

For example, the exterior member 35 is a laminate film composed of a fusion-bond layer, a metallic layer, and a surface protecting layer stacked in this order. Two laminate films are fusion-bonded or bonded with an adhesive at the outer edge of their fusion-bond layers such that each fusion-bond layer faces the electrode body 31. The fusion-bond portion may be, for example, a film such as a polyethylene or polypropylene film; the metallic layer may be aluminum foil, for example; the protecting layer may be nylon, for example.

Space between the exterior member 35 and each of the positive-electrode lead 32 and the negative-electrode lead 33 is filled with close adhesion films 34 to prevent outer air from entering therein. Exemplary materials of the close adhesion films include polyethylene, polypropylene, and polyolefin resins.

Hereinafter, each member is described, respectively.

### [Positive Electrode]

The positive electrode has a positive electrode active material layer disposed on both surfaces or one surface of a positive electrode current collector, as in the negative electrode 10 shown in FIG. 1, for example.

The positive electrode current collector is formed by, for example, a conductive material such as aluminum.

The positive electrode active material layer contains any one kind or two kinds or more of positive electrode materials (positive electrode active material) capable of occluding and releasing lithium ions and may contain a positive electrode binding agent, a positive electrode conductive auxiliary agent, a dispersing agent, or other materials according to design.

The positive electrode material is preferably a lithium-containing compound. Examples of this lithium-containing compound include a complex oxide composed of lithium and a transition metal element and a phosphate compound containing lithium and a transition metal element. Among these positive electrode materials, a compound containing at least any one of nickel, iron, manganese, and cobalt is preferable. The chemical formula of this compound is expressed by, for example, LiₓM1O₂ or Li_{y}M2PO₄, where M1 and M2 represent at least any one of the transition metal elements. In this formula, "x" and "y" represent a value varied depending on state of a charge-and-discharge of a battery, which typically satisfy 0.05 ≤ x ≤ 1.10 and 0.05 ≤ y ≤ 1.10.

As examples of a composite oxide containing lithium and a transition metal element, such as a lithium cobalt composite oxide (LiₓCoO₂), a lithium nickel composite oxide (LiₓNiO₂), and a lithium nickel cobalt composite oxide can be mentioned. As examples of the lithium nickel cobalt composite oxide, such as lithium nickel cobalt aluminum composite oxide (NCA) and lithium nickel cobalt manganese composite oxide (NCM), can be mentioned.

As examples of phosphate compounds containing lithium and a transition metal element, such as a lithium iron phosphate compound (LiFePO₄) and a lithium iron manganese phosphate compound (LiFe₁₋ᵤMnᵤPO₄ (0 < u < 1)), can be mentioned. High battery capacity and excellent cycle characteristics can be obtained by using these positive electrode materials.

As the positive electrode binding agent, for example, any one or more of polymer materials, synthetic rubber and so on, can be used. Polymer materials are, for example, polyvinylidene fluoride, polyimide, polyamideimide, aramid, polyacrylic acid, polyacrylic acid lithium, sodium polyacrylate, and carboxymethyl cellulose. Synthetic rubbers include styrene-butadiene rubber, fluorinated rubber, and ethylene propylene diene, for example.

As the positive electrode conductive auxiliary agent, for example, any one or more of carbon materials, such as carbon black, acetylene black, graphite, ketjen black, carbon nanotube, and carbon nanofiber, can be used.

### [Negative Electrode]

The inventive negative electrode is used as the negative electrode of the secondary battery. The negative electrode, which is included in the secondary battery, preferably has a negative electrode charge capacity larger relative to the electrical capacity (charge capacity as a battery) provided by the positive electrode active material agent. As a result, the precipitation of lithium metal on the negative electrode can be suppressed.

In this example, the positive electrode active material layer is provided partially on both sides of the positive electrode current collector. Likewise, the inventive negative electrode active material layer is provided partially on both sides of the negative electrode current collector. In such an arrangement, for example, the negative electrode active material layer provided on the negative electrode current collector preferably includes a region where it does not face the positive electrode active material layer. This is intended to ensure a stable battery design.

The above region where the positive and negative electrode active material layers do not face each other is almost immune from the effect of charging and discharging. Thus, the negative electrode active material layer can remain in the same state as just after its formation. This enables repeatable and precise investigation of the composition and other properties of the negative electrode active material regardless of whether charging and discharging have been conducted.

### [Separator]

The separator separates the lithium metal or the positive electrode from the negative electrode so as to prevent short-circuit current due to contact of both electrodes, while passing lithium ions through. This separator may be made of, for example, a porous film of synthetic resin or ceramics and may have a laminated structure in which two or more porous films are laminated. Examples of synthetic resin include polytetrafluoroethylene, polypropylene, and polyethylene.

### [Electrolyte liquid]

At least a part of each of positive electrode active material layer and the negative electrode active material layer, or the separator, is impregnated with a liquid electrolyte (an electrolyte liquid). In this electrolyte liquid, electrolyte salt is dissolved in a solvent and may contain other materials such as auxiliary agents may be contained.

The solvent may be, for example, a non-aqueous solvent. Examples of non-aqueous solvents include ethylene carbonate, propylene carbonate, butylene carbonate, dimethyl carbonate, diethyl carbonate, ethylmethyl carbonate, methylpropyl carbonate, 1,2-dimethoxyethane, and tetrahydrofuran. Among these, at least any one of ethylene carbonate, propylene carbonate, dimethyl carbonate, diethyl carbonate, or ethylmethyl carbonate is preferably used. This is because such solvent enables better characteristics. In this case, more advantageous characteristics can be obtained by combining high-viscosity solvents such as ethylene carbonate or propylene carbonate with low-viscosity solvents such as dimethyl carbonate, ethylmethyl carbonate, or diethyl carbonate. This is because the dissociation of electrolyte salts and ion mobility are improved.

For an alloyed negative electrode, in particular, the solvent desirably contains at least any one of the halogenated chain carbonate ester or halogenated cyclic carbonate ester. Thus, a stable coating can be formed on the negative electrode active material surface to be formed with a stable coating at charging-and-discharging, particularly charging. The halogenated chain carbonate ester is a chain carbonate ester having halogen as a constituent element (at least one hydrogen is substituted by halogen). In addition, the halogenated cyclic carbonate ester is cyclic carbonate ester having halogen as a constituent element (that is, at least one hydrogen is substituted by halogen).

The halogen type is preferably, but not limited to, fluorine, for fluorine enables the formation of a better coating than other halogens. A larger number of halogens is better, for a more stable coating is obtained, and a decomposition reaction of an electrolyte liquid is suppressed.

Examples of the halogenated chain carbonate ester include fluoromethyl methyl carbonate and difluoromethyl methyl carbonate. Examples of the halogenated cyclic carbonate ester include 4-fluoro-1,3-dioxolane-2-one and 4,5-difluoro-1,3-dioxolane-2-one.

The solvent additive preferably contains an unsaturated carbon bond cyclic carbonate ester, for this enables the formation of a stable coating on the surface of the negative electrode at charging and discharging and inhibiting a decomposition reaction of the electrolyte liquid. Examples of the unsaturated carbon bond cyclic carbonate ester include vinylene carbonate and vinyl ethylene carbonate.

In addition, the solvent additive preferably contains sultone (cyclic sulfonic acid ester), for this enables improvement of the chemical stability of the battery. Examples of sultone include propane sultone and propene sultone.

In addition, the solvent preferably contains acid anhydride, for this enables improvement of the chemical stability of an electrolyte liquid. Examples of acid anhydride include propane disulfonic acid anhydride.

The electrolyte salt may contain, for example, at least any one or more of light metal salts, such as lithium salt. Examples of lithium salt include lithium hexafluorophosphate (LiPF₆) and lithium tetrafluoroborate (LiBF₄).

The content of the electrolyte salt in the solvent is preferably 0.5 mol/kg or more and 2.5 mol/kg or less. This is because high ionic conductivity can be obtained.

### [Method of Producing Laminate-Film Type Secondary Battery]

The laminate film type secondary battery described above can be produced according to a following process, for example.

Firstly, the positive electrode is produced by using the above positive electrode material. A positive electrode mixture is prepared by mixing the positive electrode active material with, as necessary, the positive electrode binding agent, the positive electrode conductive auxiliary agent, and other materials. Then, the mixture is dispersed in an organic solvent to form a positive-electrode mixture slurry of. The mixture slurry is then applied to a positive electrode current collector with a coating apparatus, such as a die coater having a knife roll or a die head, and dried by hot air to obtain a positive electrode active material layer. The positive electrode active material layer is finally compressed with, for example, a roll press and formed. In this case, heating may be performed, and the compression may be repeated multiple times.

Secondly, the negative electrode active material layer is formed on the negative electrode current collector to produce the negative electrode through the same procedure as in the above production of the negative electrode 10.

In producing the positive and negative electrodes, the respective active material layers are formed on both sides of the positive and negative electrode current collectors. For each electrode, the active materials applied to both sides of the current collector may have different lengths (See FIG. 1).

Then, the electrolyte liquid is prepared. With ultrasonic welding and so on, the positive electrode lead 32 is attached to the positive electrode current collector, and the negative-electrode lead 33 is attached to the negative electrode current collector. The positive and negative electrodes and the separator interposed therebetween are stacked and then wound to produce the wound electrode body 31, and a protecting tape is stuck to the outermost circumference of the body. Then, the wound electrode body 31 is molded to form a flat shape. The wound electrode body 31 is then inserted between the folded film-shaped exterior member 35, and insulating portions of the exterior member are stuck to one another by heat sealing, thereby the wound electrode body 31 is encapsulated with one direction is released. The close adhesion films are inserted between the exterior member 35 and each of the positive electrode lead 32 and the negative electrode lead 33. The prepared electrolyte liquid described above is introduced from the released side in a prescribed amount to perform the impregnation of the electrolyte liquid under a vacuum. The released side is stuck by vacuum heat sealing after the impregnation. In this manner, the laminate-film type secondary battery 30 can be produced.

In a non-aqueous electrolyte secondary battery such as the laminate film type secondary battery 30 produced above, a utilization ratio of the negative electrode during charge and discharge is preferably between 93% or more and 99% or less. When the utilization ratio of the negative electrode is in the range of 93% or more, an initial charge efficiency does not decrease, and battery capacity can be greatly improved. In addition, when the utilization ratio of the negative electrode is in the range of 99% or less, Li precipitation will not occur, and safety can be ensured.

### EXAMPLES

Hereinafter, the present invention will be more specifically described by showing Examples and Comparative Examples, but the present invention is not limited to these examples.

### (Comparative Examples 1 and 2, and Examples 1 to 5)

Firstly, a negative electrode was produced, as described below. A raw material in which metal silicon and silicon dioxide were mixed was introduced into a furnace, vaporized in an atmosphere with a vacuum of 10⁻² Pa, and deposited on a negative electrode current collector that was a copper foil having ten-point mean roughness Rz on a surface of 2.5 um. Thus, a negative electrode precursor was obtained, which included the negative electrode current collector and a silicon compound layer, including silicon compound particles and formed on the negative electrode current collector.

In Comparative Examples 1 and 2, as well as in Examples 1 to 5, the formation conditions of the silicon compound layer were defined differently from each other, as summarized below.

Secondly, after sufficient cooling, the negative electrode precursor was taken out and modified by inserting lithium into the silicon compound particles by the redox method using a solvent with a moisture content reduced to 50 ppm. Consequently, a composite compound containing silicon, lithium, and oxygen, and further containing Li₄SiO₄, was formed inside the thickness direction, thereby obtaining each negative electrode.

### [Assembling a coin battery for testing]

Subsequently, as solvents, ethylene carbonate (EC), and dimethyl carbonate (DMC), were mixed, followed by dissolving an electrolyte salt (lithium hexafluorophosphate: LiPF₆) to prepare the electrolyte liquid. In this case, the solvent composition was set to EC : DMC = 30 : 70 in a volume ratio, and the content of the electrolyte salt was set to 1 mol/kg relative to the solvent. As additive agents, vinylene carbonate (VC) and fluoroethylene carbonate (FEC) were added in an amount of 1.0 mass% and 2.0 mass%, respectively.

Next, a coin battery was assembled as follows. First, a Li foil having a thickness of 1 mm was punched to a piece having a diameter of 16 mm and the piece was attached to an aluminum clad.

Then, the negative electrode obtained beforehand was punched to a piece having a diameter of 15 mm, the piece was faced with the Li foil attached to the aluminum clad via a separator, and after electrolyte injection, a 2032 coin battery was produced.

### [Measurement of Initial Efficiency]

A first-time efficiency was measured under the following conditions. First, for the produced coin battery for the initial efficiency test, charge rate was set to equivalent to 0.03 C, and the charging (first charge) was performed in CCCV mode. The CV was 0 V, and the cut-off current was 0.04 mA. Then, the discharge rate was set to 0.03C as well and discharge cut-off voltage was set to 1.2 V, and CC discharge (first discharge) was carried out.

To investigate initial charge and discharge characteristics, the first-time efficiency (hereinafter, may be referred to as an initial efficiency) was calculated. The first-time efficiency was calculated from the expression shown by First-Time Efficiency (%) = (First-Time Discharge Capacity/First-Time Charge Capacity) × 100.

### [Production of Lithium Secondary Battery and Battery Evaluation]

From the initial data obtained, a counter-positive electrode was designed to achieve a utilization ratio of 95% for a negative electrode. Based on the following expression, the utilization ratio was calculated from positive and negative electrode capacities obtained with Li of a counter electrode. Utilization Ratio = (Positive Electrode Capacity - Negative Electrode Loss) / (Negative Electrode Capacity - Negative Electrode Loss) × 100

Each lithium secondary battery of the Examples and Comparative Examples was produced based on this design. Each lithium secondary battery of Examples and Comparative Examples was evaluated as the battery.

The cycle characteristics were investigated as follows. First, the batteries were charged and discharged for two cycles at 0.2C under an atmosphere of 25°C for battery stabilization, and the discharge capacity at the second cycle was measured. The battery cycle characteristics were calculated from the discharge capacity at the third cycle, and the battery test was terminated at 300 cycles. Charging and discharging were performed at 0.7 C for charging and 0.5 C for discharging. The charge voltage was 4.3 V, the discharge cut-off voltage was 2.5 V, and the charge cut-off rate was 0.07 C.

The cycle characteristics (capacity retention rate up to 300 cycles) of each negative electrode in Examples and Comparative Examples were summarized in Table 1 below.

### (Comparative Example 1)

In Comparative Example 1, during film formation, a travel speed of a copper foil was set to 10 m/sec, and a cooling mechanism of a can roll was stopped.

A controlled temperature of a crucible was adjusted to 1250°C, the TS distance (a distance between a target and a substrate) was adjusted to 50 mm, and the vacuum was adjusted to 10⁻² Pa, then reciprocating multilayer formation was performed, and then the formation was completed with a film thickness of about 10 um.

An electrode obtained was doped with Li according to the procedure described earlier to complete a negative electrode of Comparative Example 1.

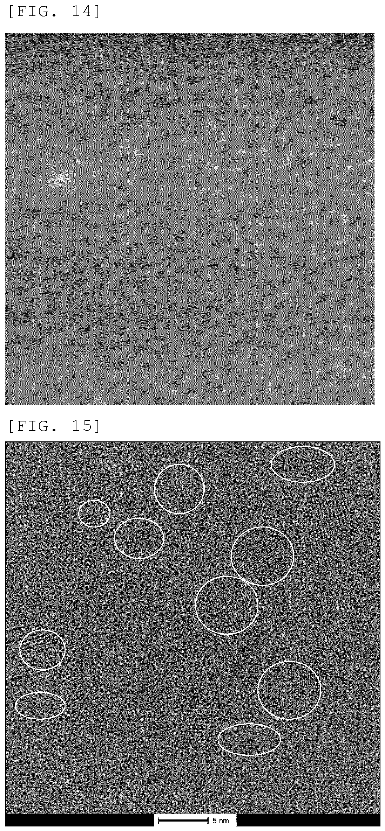

A cross-section of the negative electrode of Comparative Example 1 was observed by a scanning transmission electron microscope at an instrumental magnification of 910×10³. A cross-sectional TEM image of the negative electrode of Comparative Example 1 is shown in FIG. 15.

In an image of FIG. 15, linear portions can be observed in portions circled by white ellipses; these portions are crystal planes of Si(111).

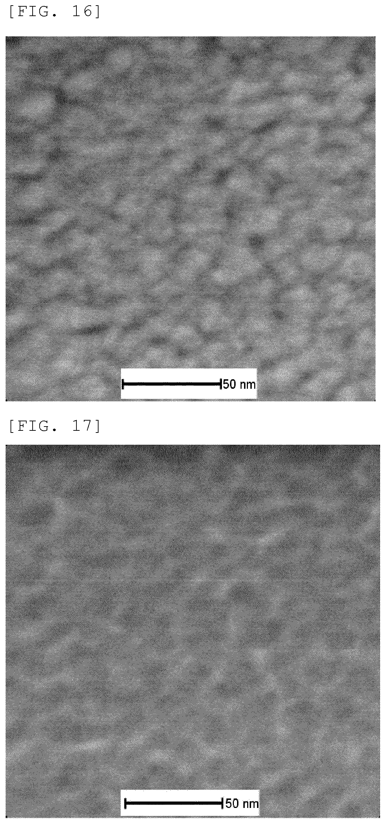

Moreover, FIG. 16 and FIG. 17 show a cross-sectional BF-STEM image and a cross-sectional HAADF-STEM image of a negative electrode active material layer of the negative electrode in Comparative Example 1, respectively. The BF image is a bright-field image corresponding to an image having a contrast inverted to that of the HAADF image.

As shown in FIG. 16 and FIG. 17, in the negative electrode of Comparative Example 1, the variation of the oxygen and silicon portions that existed inside the negative electrode active material layer in the thickness direction was strong. Specifically, the maximum widths of the regions having a low amount of oxygen were about 10 to 15 nm.

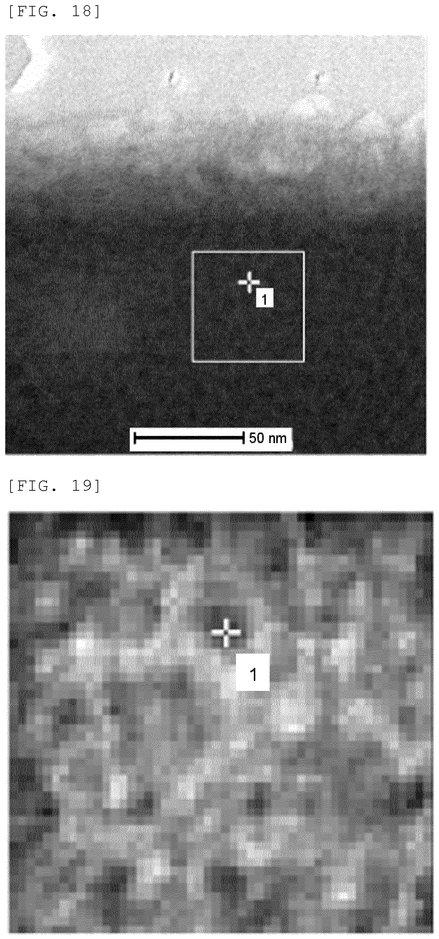

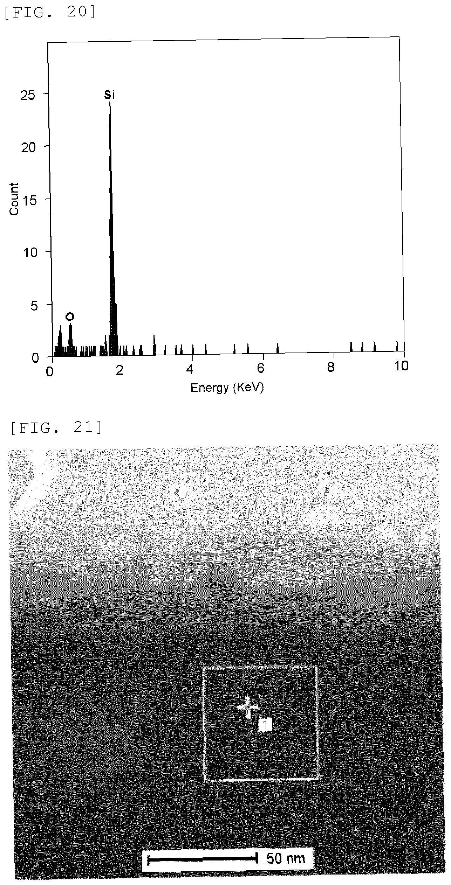

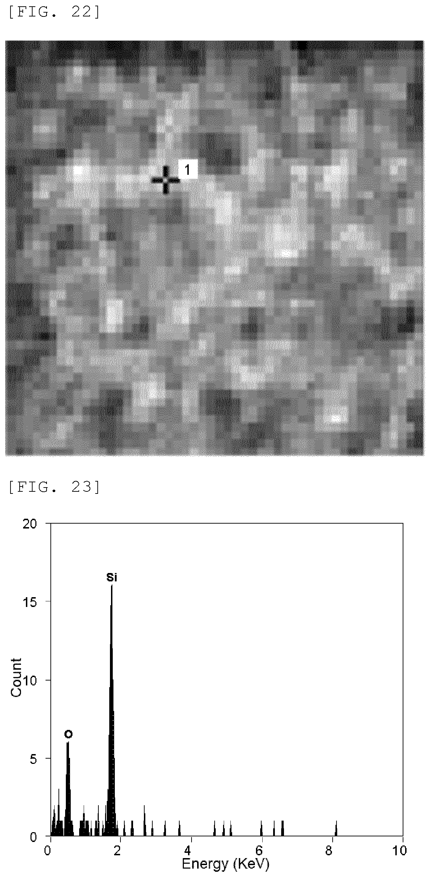

FIG. 18 and FIG. 21 show drift corrected EDS mapping images of the cross-sections of the negative electrode active material layer of the negative electrode of Comparative Example 1, respectively. In addition, FIG. 19 shows a cross-sectional BF-STEM image of a region in a white frame in FIG. 18, and FIG. 22 shows a cross-sectional BF-STEM image of a region in a white frame in FIG. 21. Moreover, in FIG. 20, an EDS spectrum of a portion where a cross is marked with "1" in FIG. 18 and FIG. 19 is shown, and in FIG. 23, an EDS spectrum of a portion where a cross is marked with "1" in FIG. 21 and FIG. 22 is shown. FIG. 18 and FIG. 21 differ from each other in the portions where crosses are marked with "1". Moreover, FIG. 19 and FIG. 21 differ from each other in the portions where the crosses are marked with "1".

As was clear from the comparison in FIG. 20 and FIG. 23, the potion where the cross was marked with "1" in FIG. 18 and FIG. 19 had smaller oxygen/silicon ratios than the potions where the cross was marked with "1" in FIG. 21 and FIG. 22.

In Comparative Example 1, a crystallization of a portion of Si due to the effect of radiant heat and heat of solidification at a reciprocating multilayer formation was confirmed.

### (Comparative Example 2)

In Comparative Example 2, a negative electrode of Comparative Example 2 was produced under the same conditions as Comparative Example 1, except that a traveling speed of a copper foil was set to 8 m/sec.

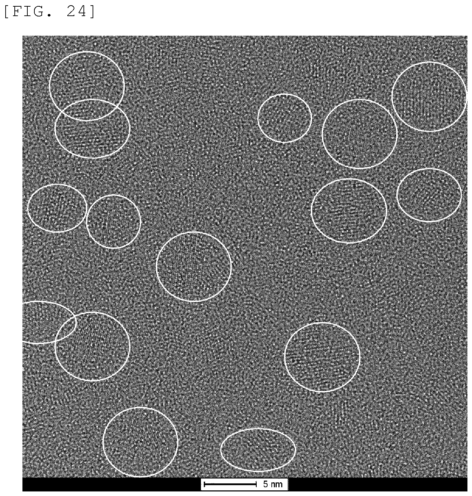

A cross-section of the negative electrode of Comparative Example 2 was observed by a scanning transmission electron microscope at an apparatus magnification of 910×10³. A cross-sectional TEM image of the negative electrode of Comparative Example 2 is shown in FIG. 24.

In the image of FIG. 24, linear portions can be observed in portions circled by white ellipses; these portions are crystal planes of Si(111).

In addition, from a result of a cross-sectional HAADF-STEM observation, it is confirmed that disproportionation and a state, in which Si had a network structure, inside the bulk (inside the thickness direction) of a negative electrode active material of the negative electrode in Comparative Example 2.

An average value of an oxygen/silicon ratio in each of a plurality of regions of a low amount of oxygen (silicon-rich) and a plurality of regions of a high amount of oxygen (oxygen-rich) inside the thickness direction in the negative electrode active material layers of the negative electrodes of Comparative Examples 1 and 2 are shown in Table 1 below.

In both Comparative Examples 1 and 2, it is considered that silicon was largely grown inside the bulk (inside the thickness direction) of each layer of the negative electrode active material layers, and then the decomposition reaction of electrolyte liquid was facilitated, resulting in the degradation of battery characteristics.

### (Example 1)

In Example 1, a traveling speed of a copper foil during a film formation was set to 25 m/sec, and the film formation was performed while a can roll was being cooled (30°C).

Meanwhile, a controlled temperature of a crucible was fixed to 1250°C, the TS distance was also fixed to 50 mm, and then reciprocating multilayer formation was performed for reciprocated multilayer at the vacuum condition of 10⁻² Pa, and then the formation was completed with a film thickness of about 10 um.

An obtained electrode was doped with Li according to a process described earlier, and a negative electrode of Example 1 was completed.

FIG. 2 is a cross-sectional HAADF-STEM image of a negative electrode active material layer of the negative electrode of Example 1. As described referring FIG. 2 to FIG. 4, the ratio of oxygen/silicon in an area surrounded by a square marked with "1" in FIG. 2 is lower than the ratio of oxygen/silicon in an area surrounded by a square marked with "2" in FIG. 2. Consequently, the area surrounded by the square marked with "1" in FIG. 2 is a first region having a low amount of oxygen, and the area surrounded by a square marked with "2" in FIG. 2 is the second region having a higher amount of oxygen than this first region.

Besides, in the negative electrode of Example 1, the central portion in the thickness direction of the negative electrode active material layer included a plurality of first regions and a plurality of second regions, and the average width of each of the maximum widths in the first regions and the maximum width in the second regions was 5 nm.

This result indicates that Si-O has a small disproportionation, and the first regions being silicon-rich and the second regions being oxygen-rich densely exist in the negative electrode active material layer of the negative electrode of Example 1.

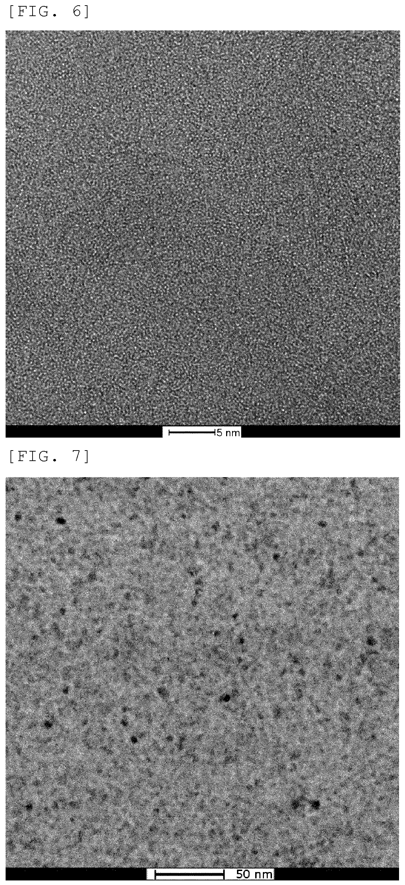

In addition, a cross-section of the negative electrode of Example 1 was observed by a Scanning Transmission Electron Microscope with an apparatus magnification of 910×10³. A cross-sectional TEM image of the negative electrode of Example 1 is shown in FIG. 6.

In the cross-sectional TEM image of FIG. 6, a crystal plane of Si (111), which was observed in the TEM images of Comparative Examples 1 and 2 shown in FIG. 15 and FIG. 24, was not observed. Thus, no crystallization of Si (111) was observed in Example 1.

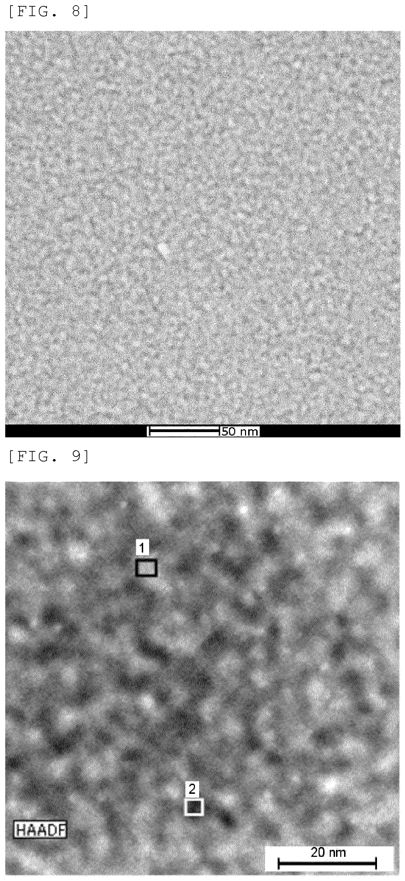

Moreover, a cross-sectional BF-STEM image and a cross-sectional HAADF-STEM image of the negative electrode active material layer of the negative electrode of Example 1 are shown in FIG. 7 and FIG. 8, respectively.

From the comparison of the STEM images of Example 1 shown in FIG. 7 and FIG. 8 with the STEM images of Comparative Example 1 shown in FIG. 16 and FIG. 17, the size of the first regions with a low amount of oxygen in the negative electrode active material layer of the negative electrode of Example 1 is smaller than the regions with a low amount of oxygen in the negative electrode active material layer of the negative electrode of Comparative Example 1. This indicates that the crystallization of Si in Example 1 is suppressed more than in Comparative Example 1.

Moreover, as shown in Table 1 below, a battery of Example 1 was capable of demonstrating superior cycle characteristics compared to batteries of Comparative Examples 1 and 2. This is considered to be because, in Example 1, the first regions and the second regions existed in a dense state.

### (Example 2)

In Example 2, a negative electrode of Example 2 was produced under the same conditions as Example 1, except that a controlled temperature of a crucible was adjusted to 1180°C, and the TS distance was adjusted to 60 mm.

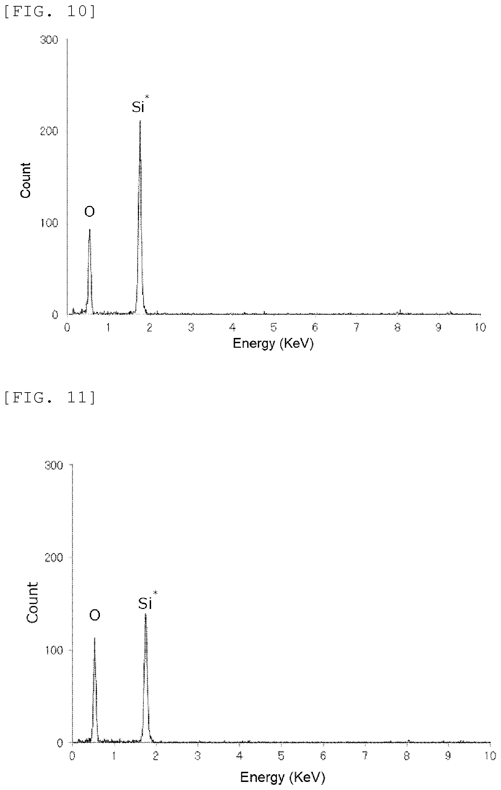

A cross-sectional HAADF-STEM image of a negative electrode active material layer of the negative electrode of Example 2 is shown in FIG. 9. Moreover, FIG. 10 shows an EDX spectrum of an area surrounded by a square marked with "1" in FIG. 9, and FIG. 11 shows an EDX spectrum of an area surrounded by a square marked with "2" in FIG. 9.

The spectra in FIG. 10 and FIG. 11 indicate that the ratio of oxygen/silicon of the area with "1" in FIG. 9 is lower than the ratio of oxygen/silicon of the area with "2" in FIG. 9. Therefore, the area with "1" in FIG. 9 is a first region having a low amount of oxygen, and the area with "2" in FIG. 9 is a second region having a higher amount of oxygen than the first region.

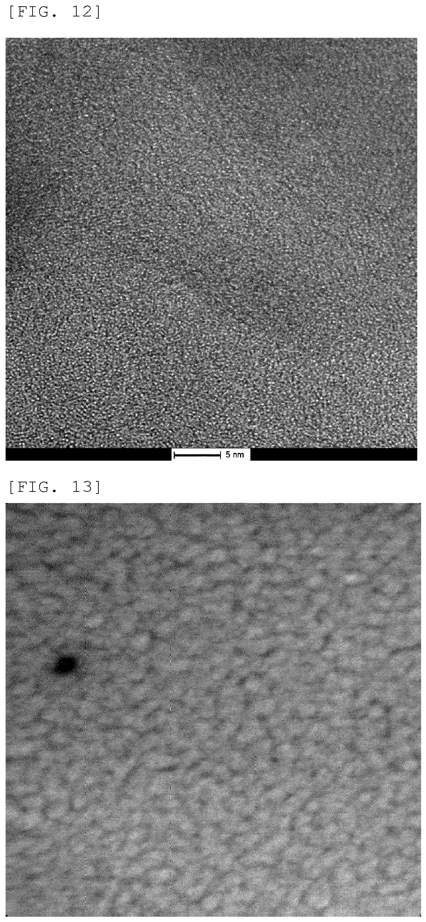

Meanwhile, a cross-section of the negative electrode of Example 2 was observed by a Scanning Transmission Electron Microscope with an apparatus magnification of 910×10³. A cross-sectional TEM image of the negative electrode of Example 2 is shown in FIG. 12.

A comparison of the cross-sectional TEM images in FIG. 6 and FIG. 12 indicates that the first regions having the low amount of oxygen and the second regions having the high amount of oxygen in the negative electrode of Example 2 were smaller than those of Example 1, respectively, and the variation structure was more refined. Specifically, the maximum width of the first regions and the maximum width of the second regions in Example 2 were less than 5 nm, respectively.

Then, as clear from Table 1 below, the battery characteristics of Example 2 were confirmed to be improved than those of Example 1.

### (Example 3)

In Example 3, a negative electrode of Example 3 was produced under the same conditions as Example 1, except that a temperature of a crucible was adjusted to 1300°C.

A cross-sectional BF-STEM image and a cross-sectional HAADF-STEM image of a negative electrode active material layer of the negative electrode of Example 3 are shown in FIG. 13 and 14, respectively.

A comparison of STEM images of Example 3 in FIG. 13 and 14, with STEM images of Example 1 in FIG. 7 and 8 indicates that silicon and oxygen disproportionation in Example 3 was slightly more advanced than in Example 1, but Si (111) did not reach the state of crystallization.

As shown in Table 1, although a battery of Example 3 was inferior to batteries of Example 1 and 2, but capable of demonstrating superior cycle characteristics than batteries of Comparative Examples 1 and 2.

### (Example 4)

In Example 4, a negative electrode precursor was obtained by the same process as in Example 1, and after Li doping of the negative electrode precursor, an electrode was heat treated at 450°C for 3 hours to change a phase of a part of Li₄SiO₄ to Li₂SiO₃.

As shown in Table 1, a battery of Example 4 was also capable of demonstrating superior cycle characteristics than batteries of Comparative Examples 1 and 2. Moreover, although Example 1, made up of Li₄SiO₄, had better battery characteristics, a result showed that a handleability of the electrode, i.e., resistant property against moisture, was improved.

### (Example 5)

In Example 5, the heat treatment temperature in Example 4 was changed to 550°C.

As shown in Table 1, a battery of Example 5 was also capable of demonstrating better cycle characteristics than Comparative Examples 1 and 2. Moreover, it was found that Li₂SiO₃ was generated within a bulk in Example 5, thus the electrode was able to be handled in a general environment.

### (Example 6 to 12)

In Examples 6 to 12, the most suitable point was sought by adjusting a roughness degree. Specifically, negative electrodes in Examples 6 to 12 were produced by the same process as in Example 1, except that the ten-point mean roughness Rz of the surface of a negative electrode current collectors was changed as shown in Table 1 below. Moreover, the negative electrodes of Examples 6 to 12 were produced by the same process as in Example 1, except that the negative electrodes produced were used, then cycle characteristics were evaluated. Results are shown in Table 1 below.

In following Table 1, average values of ratios of oxygen/silicon in a plurality of regions having a low amount of oxygen (first regions in Examples) and average values of ratios of oxygen/silicon in a plurality of regions having a high amount of oxygen (second regions in Examples) in each of Comparative Examples and Examples are shown. In addition, Table 1 also shows types of Li silicate in negative electrode active material layers of the negative electrodes and the presence or absence of Si (111) crystal planes based on TEM observations in each of Comparative Examples and Examples.

**[Table 1]**

| | Discharge capacity retention rate up to 300 Cy (%) | Roughness degree of copper foil surface (µm) | Maximum width of region having high amount of oxygen and maximum width of region having low amount of oxygen | Types of Li-silicate | Average oxygen/silicon ratio in low oxygen amount (silicon-rich) region | Average oxygen/silicon ratio in high oxygen amount (oxygen-rich) region | Presence/absence of Si(111) |
|---|---|---|---|---|---|---|---|
| Comparative Example 1 | 71 | 2.5 | Maximum width of region having low amount of oxygen is about 10 to 15 nm | Li₄SiO₄ | 0.125 | 0.39 | With crystal phase |
| Comparative Example 2 | 62 | 2.5 | Average maximum width of region having low amount of oxygen is 20 nm (Network structure of Si) | Li₄SiO₄ | 0.1 | 0.41 | With crystal phase |
| Example 1 | 85 | 2.5 | Average 5 nm | Li₄SiO₄ | 0.44 | 0.79 | Amorphous |
| Example 2 | 88 | 2.5 | 5 nm or less | Li₄SiO₄ | 0.45 | 0.85 | Amorphous |
| Example 3 | 81 | 2.5 | 5 to 10 nm | Li₄SiO₄ | 0.35 | 0.67 | Amorphous |
| Example 4 | 84 | 2.5 | Average 5 nm | Li₂SiO₃, Li₄SiO₄ | 0.43 | 0.78 | Amorphous |
| Example 5 | 83 | 2.5 | Average 5 nm | Li₂SiO₃ | 0.44 | 0.8 | Amorphous |
| Example 6 | 80 | 0.5 | Average 5 nm | Li₄SiO₄ | 0.44 | 0.79 | Amorphous |
| Example 7 | 80.5 | 1 | Average 5 nm | Li₄SiO₄ | 0.44 | 0.79 | Amorphous |
| Example 8 | 84 | 1.5 | Average 5 nm | Li₄SiO₄ | 0.44 | 0.79 | Amorphous |
| Example 9 | 85 | 2 | Average 5 nm | Li₄SiO₄ | 0.44 | 0.79 | Amorphous |
| Example 10 | 86 | 3 | Average 5 nm | Li₄SiO₄ | 0.44 | 0.79 | Amorphous |
| Example 11 | 86 | 5 | Average 5 nm | Li₄SiO₄ | 0.44 | 0.79 | Amorphous |
| Example 12 | 84 | 7 | Average 5 nm | Li₄SiO₄ | 0.44 | 0.79 | Amorphous |

As results shown in Table 1, it was found that the negative electrodes of Examples 1 to 12 were capable of realizing superior cycle characteristics than the negative electrodes of Comparative Examples 1 and 2. At this point, Examples 1 to 12 included a plurality of the first regions having the low amount of oxygen and a plurality of the second regions having the higher amount of oxygen than the first regions, and averages of each of maximum widths in the first regions and averages of maximum widths in the second regions was 10 nm or less, while Comparative Examples 1 and 2 had averages of maximum widths that exceeded 10 nm in the regions having the low amount of oxygen.

Furthermore, the negative electrodes of Examples 1 to 12 formed the negative electrode active material layers on the negative electrode current collectors having roughened surfaces, thus were capable of forming without binders or conductive materials. As a result, as compared with negative electrodes made from a negative electrode active material in powder shape, the negative electrodes in Examples 1 to 12 successfully reduced regions not involved in charge and discharge in the negative electrode active material, in addition, excessive space could be significantly reduced, and the energy density of the electrodes can be significantly increased.

In other words, above Examples confirm that the inventive negative electrode can significantly increase capacity while maintaining excellent battery characteristics.

Furthermore, the results shown in Table 1 indicated that even among Example 1, 6 to 12 where the roughness degree of the negative electrode current collectors were changed, as long as the ten-point mean roughness Rz of the surfaces of the negative electrode current collectors was 1.5 um or more, delamination of the active material due to charge and discharge was less likely and characteristics were excellent. On the other hand, when the ten-point mean roughness Rz of the surfaces of the negative electrode current collectors was less than 5 um, by virtue of the roughened portions, adhesion to substrate was able to be secured, and delamination of the active material layer was suppressed, resulting in improving the characteristics.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. A negative electrode comprising:
a negative electrode current collector with a surface having roughened surface; and
a negative electrode active material layer provided on the negative electrode current collector,
wherein the negative electrode active material layer has a multilayer structure,
in the multilayer structure, a central portion of each layer in a thickness direction includes a composite compound containing silicon, lithium, and oxygen, a plurality of first regions having a lower amount of oxygen, and a plurality of second regions having a higher amount of oxygen than the first regions, and
an average width of each of a maximum width in the first regions and a maximum width in the second regions is 10 nm or less.

2. The negative electrode according to claim 1,
wherein a ratio of oxygen/silicon is higher than 1/3 in a peak intensity analyzed by a TEM-EDX of the composite compound in each of the first regions and the second regions.

3. The negative electrode according to claim 1 or 2,
wherein the composite compound does not have a crystal plane of Si (111) in TEM observation.

4. The negative electrode according to any one of claims 1 to 3,
wherein the composite compound contains at least any one of Li₄SiO₄ and Li₂SiO₃.

5. The negative electrode according to any one of claims 1 to 4,
wherein
ten-point mean roughness Rz of the surface of the negative electrode current collector is within a range of 1.5 um or more and 5 um or less.
